# EUROPÄISCHE PATENTSCHRIFT

(11) **EP 0 523 575 B1**
(45) Veröffentlichungstag und Bekanntmachung des Hinweises auf die Patenterteilung: **02.11.1995**
(21) Anmeldenummer: 92111841.0
(22) Anmeldetag: 11.07.1992
(51) Int. Cl.: B29C 49/64

(54) **Vorformling, Verfahren zur Herstellung des Vorformlings sowie Verfahren zur Beheizung des Vorformlings**
Preform, process for producing and heating the same
Parison et son procédé de fabrication et de rechauffage

(30) Priorität: 19.07.1991 DE 4123933
(43) Veröffentlichungstag der Anmeldung: 20.01.1993
(73) Patentinhaber: KRUPP CORPOPLAST MASCHINENBAU GMBH, 22123 Hamburg (DE)
(72) Erfinder: Horwege, Claus, W-2000 Hamburg 76 (DE)
(74) Vertreter: Klickow, Hans-Henning

(56) Entgegenhaltungen:
- GB-A- 2 042 408
- US-A- 4 153 667
- PATENT ABSTRACTS OF JAPAN vol. 7, no. 71 (M-202)(1216) 24. M rz 1983

## Beschreibung

Die Erfindung betrifft einen Vorformling aus einem thermoplastischen Material, insbesondere einem bei einer Blasverformung orientierbaren Material, der einen Mündungsbereich, einen geschlossenen Boden sowie eine den Boden mit dem Mündungsbereich verbindende Seitenwandung aufweist und bei dem im Bereich der Oberfläche des Vorformlings mindestens zwei räumlich voneinander getrennte Strukturierungssegmente zur Unterstützung einer Ausbildung eines Temperaturprofiles angeordnet sind.

Die Erfindung betrifft darüber hinaus ein Verfahren zur Herstellung eines thermoplastischen Vorformlings, der im Bereich einer Heizeinrichtung temperierbar ist sowie insbesondere auf eine zur Blasverformung geeignete Temperatur beheizt werden kann und bei dem der Vorformling im Bereich eines Endes mit einer geschlossenen Gestaltung und im Bereich eines anderen Endes mit einer Mündung ausgebildet wird und bei dem der Vorformling mindestens im Bereich eines Teiles seiner Oberfläche diese vergrößernd strukturiert wird, und bei dem der Vorformling durch einen Formungsvorgang aus einem thermoplastischen Material hergestellt wird, das nach einer Durchführung des Formvorganges abgekühlt wird.

Die Erfindung betrifft schließlich ein Verfahren zur Beheizung eines Vorformlings aus einem thermoplastischen Material, insbesondere eines zur Blasverformung geeigneten Vorformlings, bei dem der Vorformling von mindestens einer ihn temperierenden Wärmequelle beaufschlagt wird und bei dem der Vorformling mindestens in einem Bereich seiner Oberfläche vor der Durchführung einer Wärmebeaufschlagung mit einer seine Oberfläche vergrößernden Strukturierung versehen wird, die relativ zu einer Wanddicke des Vorformlings eine geringe Profilierungstiefe aufweist.

Derartige Vorformlinge werden verwendet, um Flaschen oder andere Behälter im Blasverfahren herzustellen. Für ein derartiges Verfahren sind insbesondere Vorformlinge aus Polyäthylenterephthalat (PET) geeignet. Dieses Material weist den Vorteil auf, das es bei der Formung des Behälters orientiert wird und aufgrund dieser Orientierung mit einer erheblichen Festigkeit versehen wird, die es erlaubt, die zu fertigenden Behälter vergleichsweise dünnwandig auszubilden. Vor einer Beaufschlagung der Vorformlinge mit einem Blasdruck ist es erforderlich, die Vorformlinge mit einer Temperatur zu versehen, die eine Verformung ermöglicht. Insbesondere sind hier bei der Durchführung des Blasverfahrens zu expandierende Bereiche des Vorformlings mit einer Temperatur zu versehen, die eine Orientierung des Materials ermöglicht. Es ist aber auch möglich, eine Temperierung bestimmter Bereiche des Vorformlings, insbesondere eines der Mündung zugewandten Bereiches, derart vorzunehmen, daß hier eine Verformung zur Ausbildung eines Gewindes beziehungsweise zur Ausbildung eines Stützringes durchgeführt werden kann. Bei dieser Verformung verbleibt das Material in der Regel in einem amorphen Zustand.

Zur Temperierung des Vorformlings werden häufig Strahlungsquellen eingesetzt. Insbesondere sind Infrarot-Strahlungsquellen verbreitet. Aufgrund der häufigen Ausbildung des Vorformlings aus einem transparenten Material erfordert jedoch eine derartige Beheizung eine nicht unerhebliche Zeitspanne, da ein großer Teil der einwirkenden Strahlung durch das transparente Material hindurchtritt. Auch bei einer Anordnung von Reflektoren hinter den Vorformlingen ist der Wirkungsgrad der Beheizung vergleichsweise gering, da zum einen die Durchtrittsstrecke der Strahlung durch die Wandung des Vorformlings nur eine geringe Länge aufweist und zum anderen erhebliche Streuverluste sowie Absorptionen durch Verkleidungen oder andere Elemente auftreten.

Dies führt dazu, daß bereits bei einer geforderten gleichmäßigen Temperierung des Vorformlings eine erhebliche Aufheizzeit erforderlich ist. Bei einer geforderten profilierten Temperaturverteilung im Bereich des Vorformlings tritt darüber hinaus das Problem auf, daß aufgrund der Streueigenschaften der verwendeten Strahler eine gezielte Einbringung von Strahlungsenergie nur in begrenztem Umfang erfolgen kann und während eines länger andauernden Beheizungsvorganges sowohl in der Regel erwünschte Temperaturausgleichsvorgänge zwischen einem Außen- und einem Innenbereich des Vorformlings auftreten, darüber hinaus aber auch Ausgleichsvorgänge in einer Längsrichtung des Vorformlings stattfinden, die die Ausbildung eines Temperaturprofils mit großen Temperaturunterschieden auf einem geringen Raum nur begrenzt realisierbar machen.

In der JP-A-57 212 031 wird ein Verfahren zur Herstellung eines Vorformlings beschrieben, bei dem zur Erzeugung einer Oberflächenprofilierung im Bereich des Vorformlings eine profilierte Extrusionsdüse verwendet wird. Das plastifizierte Material zur Herstellung des Vorformlings wird bei der Durchführung des Extrusionsvorganges durch die Extrusionsdüse hindurchgedrückt. Hierdurch entsteht ein schlauchartiger Vorformling, der eine Oberflächenprofilierung aufweist, die aus in Längsrichtung verlaufenden Vertiefungen und Erhöhungen ausgebildet ist. Der Vorformling wird in einer Blasform mit definierter Rauhigkeit zu einem fertigen Behälter aufgeblasen. Ein Bodenbereich des Vorformlings wird erst bei einem Verschließen der Blasformhälften durch einen Abquetschvorgang ausgebildet.

In der GB-A-2 042 408 wird ein Vorformling beschrieben, der durch eine Sandstrahlung mit einer matten Oberfläche versehen wurde. Aus einem derart behandelten Vorformling soll durch einen Blasvorgang eine Flasche produziert werden, die eine opake und matte Oberfläche aufweist. Die Oberflächenprofilierung des Vorformlings dient gemäß dieser Druckschrift dazu, durch eine mechanische Formvorgabe die Oberflächengeometrie des Endproduktes zu beeinflussen.

Aufgabe der vorliegenden Erfindung es daher, einen Vorformling der einleitend genannten Art derart auszubilden, daß er innerhalb einer kurzen Zeitspanne mit einer vorgebbaren Temperaturverteilung versehen werden kann.

Diese Aufgabe wird erfindungsgemäß dadurch gelöst, daß die Strukturierungssegmente mindestens bereichsweise als Aufrauhungen ausgebildet sind, die unregelmäßige Reflexionsflächen bereitstellen und daß die Strukturierungssegmente durch im wesentlichen glatt ausgebildete Bereiche der Oberfläche voneinander getrennt sind.

Eine weitere Aufgabe der vorliegenden Erfindung besteht darin, das Verfahren zur Herstellung des Vorformlings derart zu verbessern, daß ein in einfacher Weise thermisch profilierbarer Vorformling strukturiert wird.

Diese Aufgabe wird erfindungsgemäß dadurch gelöst, daß der Vorformling nach der Abkühlung mit räumlich voneinander getrennten Strukurierungssegmenten versehen wird, daß der Vorformling mittels einer Spritzgußeinrichtung gespritzt und nach Entnahme aus der Spritzgußeinrichtung aufgerauht wird.

Eine andere Aufgabe der vorliegenden Erfindung besteht darin, das Verfahren zur Beheizung des Vorformlings derart zu verbessern, daß eine Temperierung des Vorformlings örtlich präzise und innerhalb einer kurzen Zeitspanne durchgeführt werden kann.

Diese Aufgabe wird erfindungsgemäß dadurch gelöst, daß eine große Anzahl von unterschiedlichen Oberflächenbereichen mit unterschiedlichen Orientierungen relativ zu einer Hauptrichtung der Oberfläche zur Beeinflussung der Richtung der Wärmestrahlung innerhalb der Vorformlingswandung verwendet werden, die Oberflächenbereiche als Prismen und Spiegel für die Heizstrahlung verwendet werden, die Prismen die Richtung der Heizstrahlung innerhalb des Materials ändern, so daß der wirksame Durchlaufweg zwischen der äußeren Oberfläche und der inneren Oberfläche des Vorformlings verlängert wird und daß durch die Spiegel diejenigen Anteile der Heizstrahlung reflektiert werden, die nicht bereits absorbiert wurden.

Durch die Anordnung einer Strukturierung im Bereich der Oberfläche des Vorformlinges ist es möglich, den Wirkungsgrad des Heizvorganges zu erhöhen. Dies resultiert zum einen daraus, daß aufgrund der durch die Strukturierung vergrößerten Oberfläche insbesondere bei schräg auf den Vorformling auftreffenden Strahlungsanteilen ein Eintritt in den Vorformling erleichtert wird. Darüber hinaus werden bei einer beispielsweise als Aufrauhung realisierten Oberflächenstrukturierung Reflexionsanteile vermindert und damit der Anteil der in den Vorformling eingeleiteten Strahlungskomponenten weiter vergrößert. Die unregelmäßig orientierten Segmente der Oberfläche des Vorformlings führen darüber hinaus dazu, daß erhebliche Anteile der Strahlung den Vorformling nicht mit radialer Orientierung durchtreten, sondern bezüglich einer radialen Orientierung geneigte Verläufe aufweisen. Hieraus resultieren längere Durchlaufwege durch das Material des Vorformlings und damit höhere Absorptionsraten. Strukturierte Oberflächen führen ebenfalls dazu, daß von Oberflächenbereichen des Vorformlings in die Wandung zurückreflektierte Strahlungsanteile mit unterschiedlichen Phasenversätzen versehen werden, die bei geeigneten Wellenlängen zu einer teilweisen Kompensation von eintretenden und reflektierten Wellenanteilen führen, die eine Umsetzung in Wärme zur Folge haben. Es treten somit eine Vielzahl von den Beheizungsvorgang positiv beeinflussenden Effekten auf, die sowohl jeder für sich als auch in ihrem Zusammenwirken den Anteil an absorbierter Strahlungsenergie erhöhen und somit zu einer Verkürzung der Beheizungszeit führen.

Gemäß einer bevorzugten Ausführungsform der Erfindung ist vorgesehen, daß die Profilierung lediglich in mindestens einem vorgebbaren Bereich der Oberfläche erfolgt. Durch eine abwechselnde Anordnung von profilierten und nicht profilierten Bereichen ist es möglich, den Wirkungsgrad der Strahlungsabsorption zu steuern und hierdurch eine Temperaturprofilierung, insbesondere in Längsrichtung des Vorformlings, vorzunehmen. Es ist hierbei damit zu rechnen, daß der Vorformling im Bereich seiner profilierten Oberfläche mit einer höheren Temperatur und im Bereich seiner unprofilierten Oberfläche mit einer geringeren Temperatur versehen wird. Hierdurch ist es insbesondere möglich, scharf begrenzte Temperaturübergänge zu realisieren, da für die Erzeugung der höheren Temperaturen lediglich geringe Heizzeiten benötigt werden und die Ausbildung des erzeugten Temperaturprofils beeinträchtigende Ausgleichsvorgänge nur während eines vergleichsweise geringen Zeitraumes stattfinden können.

Gemäß einer anderen bevorzugten Ausführungsform der Erfindung ist vorgesehen, daß Bereiche mit unterschiedlichen Profilierungen vorgesehen sind. Hierdurch ist es möglich, exakt vorgebbare Temperaturprofile auszubilden, da der Wirkungsgrad der jeweiligen Strahlungsabsorption nahezu stufenlos vorgegeben werden kann. Insbesondere bei einer Kombination mit Strahlungsquellen, die in Profilierungsrichtung mindestens bereichsweise mit unterschiedlicher Intensität strahlen können, kann hierdurch in einer sehr kurzen Beheizungszeit und mit einem hohen Wirkungsgrad das erwünschte Temperaturprofil erzeugt werden.

Gemäß einer weiteren bevorzugten Ausführungsform der Erfindung ist vorgesehen, daß eine Profilierung sowohl im Bereich einer äußeren Oberfläche des Vorformlings als auch im Bereich einer einem Innenraum zugewandten inneren Oberfläche des Vorformlings erfolgt. Durch eine derartige Ausbildung kann insbesondere das Reflexionsverhalten sowie die Temperierung des Vorformlings im Bereich seiner Innenbegrenzung beeinflußt werden.

Weitere Einzelheiten der vorliegenden Erfindung ergeben sich aus der nachfolgenden ausführlichen Beschreibung und den beigefügten Zeichnungen, in denen bevorzugte Ausführungsformen der Erfindung beispielsweise veranschaulicht sind.

In den Zeichnungen zeigen:
- Fig. 1:: einen Längsschnitt durch einen Vorformling, der im Bereich eines seiner Mündung zugewandten Halsbereiches mit einer strukturierten Oberfläche versehen ist und dessen Halsbereich zur Ausformung eines Gewindes vorgesehen ist,
- Fig. 2:: eine teilweise Darstellung eines Längsschnittes durch einen Vorformling, der mit voneinander getrennten Profilierungsbereichen versehen ist,
- Fig. 3:: eine vergrößerte prinzipielle Darstellung eines Strahlungsverlaufes innerhalb der Vorformlingswandung,
- Fig. 4:: eine vergrößerte teilweise Darstellung eines Längsschnittes durch einen Vorformling mit unterschiedlichen Profilierungstiefen,
- Fig. 5:: eine Seitenansicht eines an einer Heizeinrichtung vorbeigeführten Vorformlings **und**
- Fig. 6:: eine Seitenansicht eines Vorformlings, der im wesentlichen Bereich seiner Ausdehnung zwischen einem Stützring und einem Bodenbereich mit einer Oberflächenprofilierung versehen ist.

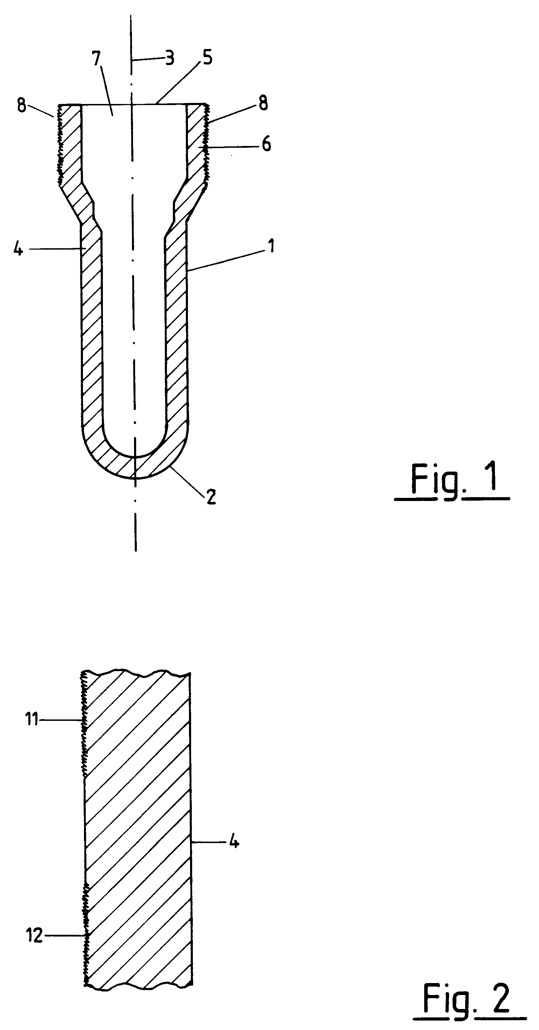

Ein Vorformling (1) besteht im wesentlichen aus einem Boden (2), einer sich im wesentlichen zylindrisch entlang einer Längsachse (3) erstreckenden Wandung (4), einem die Wandung (4) in eine Mündung (5) überleitenden Hals (6) sowie einem von der Wandung (4) begrenzten Innenraum (7). Bei der Ausführungsform gemäß Figur 1 weist der Vorformling (1) im Bereich seiner äußeren Oberfläche eine Strukturierung (8) auf, die beispielsweise als eine Aufrauhung ausgebildet sein kann. Die Strukturierung (8) führt zu einer Vergrößerung der Oberfläche des Vorformlings (1) und ermöglicht dadurch eine kürzere Beheizungszeit. Der Vorformling gemäß Figur 1 ist dazu vorgesehen, zunächst im Bereich seines Halses (6) erwärmt zu werden, um ein Gewinde (9) und einen Stützring (10) auszuformen. Eine derartige Bearbeitung des Vorformlings (1) ist insbesondere dann zweckmäßig, wenn zur Erhöhung der Temperaturbeständigkeit des Vorformlings (1) der nach dieser Umformung noch weitgehend amorphe Halsbereich des Vorformlings (1) kristallisiert werden soll.

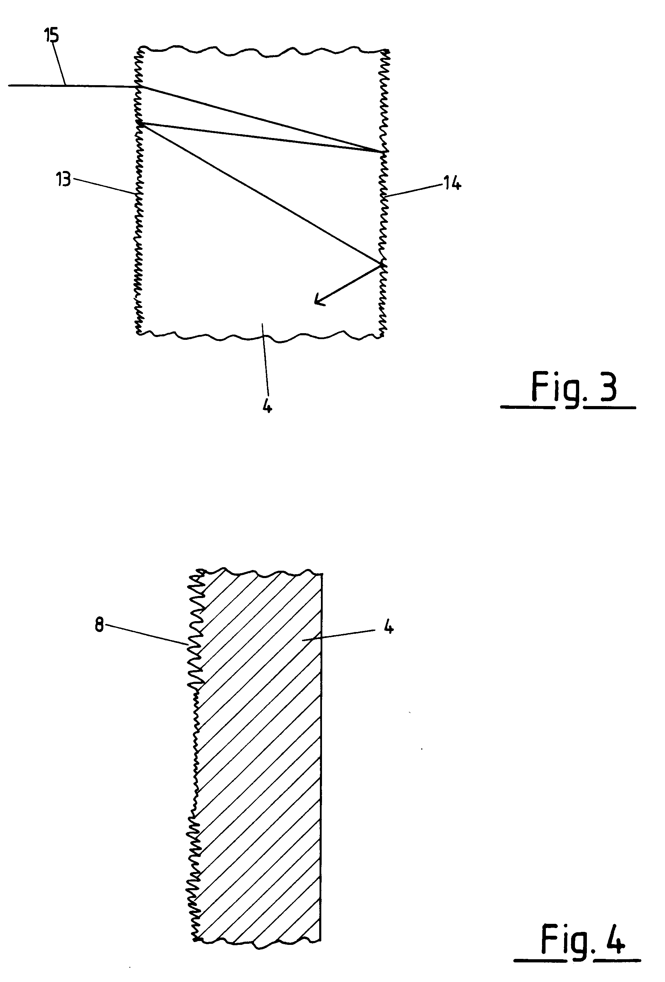

Bei der Ausführungsform gemäß Figur 2 ist die Strukturierung (8) in einem seitlichen Bereich der Wandung (4) angeordnet und aus Strukturierungssegmenten (11,12) ausgebildet. Durch die abwechselnde Anordnung von Strukturierungssegmenten (11,12) und im wesentlichen glatt ausgebildeten Bereichen der Oberfläche ist es möglich, in Richtung der Längsachse (3) eine Temperaturprofilierung zu erzeugen. Bei der Ausführungsform gemäß Figur 3 ist sowohl im Bereich einer äußeren Oberfläche (13) als auch im Bereich einer dem Innenraum (7) zugewandten inneren Oberfläche (14) eine Strukturierung (8) vorgesehen. Ein schematisch dargestellter Strahlengang (15) veranschaulicht ein mögliches Brechungs- und Reflexionsverhalten, das zu vergleichsweise langen Durchlaufwegen der Strahlung durch die Wandung (4) des Vorformlings (1) führt und somit einen hohen Absorptionsanteil zur Folge hat. Durch die Überlagerung einer Vielzahl derartiger Strahlengänge (15) ist es darüber hinaus möglich, daß Überlagerungen der Strahlung auftreten, die zu einer Auslöschung von Strahlungskomponenten führen, die eine Wärmefreisetzung zur Folge haben. Eine entsprechende teilweise Auslöschung kann auch dadurch erfolgen, daß infolge der Oberflächenstrukturierung bei der Reflexion ein Phasenversatz realisiert wird, der einer entsprechenden Überlagerung von Strahlungsanteilen förderlich ist.

Entsprechend der Darstellung in Figur 4 ist es auch möglich, im Bereich der Oberfläche des Vorformlings (1) Strukturierungen (8) mit unterschiedlichen Profilierungstiefen vorzusehen. Durch die unterschiedlichen Profilierungstiefen ist es möglich, stufenlose Übergänge zur Realisierung von vorgebbaren Temperaturprofilen zu erzeugen und hierdurch exakt definierte Temperaturprofile bereitzustellen.

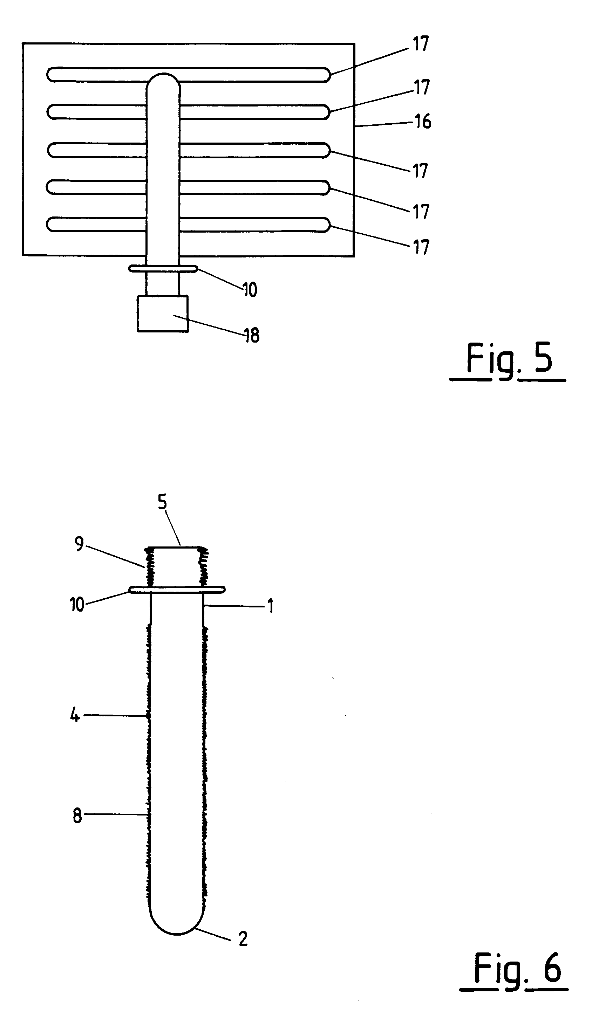

Zur Temperierung wird der Vorformling (1) entsprechend Figur 5 an einer Heizung (16) vorbeigeführt. Im Bereich der Heizung (16) sind Strahler (17) angeordnet, die sich mit ihren Längsachsen im wesentlichen in einer Transportrichtung des Vorformlings (1) erstrecken. Zur Vereinfachung des Transportes des Vorformlings (1) ist dieser von einer Halterung (18) geführt.

In Figur 6 ist ein Vorformling dargestellt, der mit einem angespritzen Außengewinde (9) sowie einem angespritzen Stützring (10) versehen ist. In Richtung auf den Boden (2) ist im wesentlichen Bereich der Wandung (4) unterhalb des Stützringes (10) eine als Strukturierung (8) ausgebildete Aufrauhung angeordnet. Die Strukturierung (8) ist bei dieser Ausführungsform lediglich im Bereich einer äußeren Begrenzung des Vorformlings (1) angeordnet. Zur Verbesserung der Wärmeaufnahme ist es aber auch möglich, zusätzlich im Bereich der dem Innenraum (7) zugewandten Begrenzung des Vorformlings (1) eine Strukturierung (8) anzuordnen. Für spezielle Anwendungen ist es auch denkbar, im Bereich des Bodens (2) eine die Oberfläche vergrößernde Strukturierung (8) vorzusehen.

Die Erzeugung der Strukturierung (8) im Bereich des Vorformlings (1) kann auf unterschiedliche Weise erfolgen. Bei einer vergleichsweise geringen Anzahl von mit einer Strukturierung (8) zu versehenden Vorformlingen (1) ist es möglich, den Vorformling (1) zunächst zu extrudieren oder ihn mit Hilfe einer Spritzgußeinrichtung zur Kunststoffverarbeitung zu formen. Anschließend wird dann die äußere Oberfläche (13) bzw. die innere Oberfläche (14) des Vorformlings (1) mechanisch bearbeitet. Diese Bearbeitung kann beispielsweise als Sandstrahlung oder als Schleifvorgang realisiert werden. Prinzipiell ist es auch möglich, über geeignete chemische Behandlungen eine Aufrauhung der Oberfläche durchzuführen.

Neben dieser nachträglichen Aufbringung der Strukturierung (8) ist es auch möglich, beispielsweise eine Spritzgußform mit einer geeigneten Strukturierung im Bereich der den Formraum begrenzenden Flächen zu versehen und unmittelbar strukturierte Vorformlinge (1) zu fertigen. Dieses Verfahren ist insbesondere bei einer Fertigung von großen Mengen an Vorformlingen (1) zweckmäßig.

Bei einem Vorformling (1), der in einem wesentlichen Bereich der Oberfläche seiner Wandung (4) mit einer Strukturierung (8) versehen ist, ist es möglich, bei einer hinreichend mit kontinuierlichen Übergängen versehenen Strukturierung (8) bei einer Blasverformung einen Behälter auszuformen, dessen Oberflächengüte vergleichbar zu der eines Behälters ist, der aus einem Vorformling (1) mit glatter Oberflächenstruktur gefertigt wurde. Dies resultiert im wesentlichen aus der während des Blasvorganges erfolgenden erheblichen Oberflächenvergrößerung und den bei dieser Oberflächenvergrößerung im Bereich des Materials auftretenden Ausgleichsvorgängen, während derer insbesondere Änderungen im Bereich der molekularen Anordnung auftreten, die zu einer Orientierung des Materials führen.

## Patentansprüche

1. Vorformling aus einem thermoplastischen Material, insbesondere einem bei einer Blasverformung orientierbaren Material, der einen Mündungsbereich (5), einen geschlossenen Boden (2) sowie eine den Boden (2) mit dem Mündungsbereich (6) verbindende Wandung (4) aufweist und bei dem im Bereich mindestens eines Teiles einer den Vorformling begrenzenden Oberfläche (13,14) eine die Oberfläche (13,14) vergrößernde Strukturierung (8) angeordnet ist, die eine im Vergleich zu einer Wandungsdicke des Vorformlings (1) geringe Profilierungstiefe aufweist und bei dem im Bereich der Oberfläche (13,14) des Vorformlings (1) mindestens zwei räumlich voneinander getrennte Strukturierungssegmente (11,12) zur Unterstützung einer Ausbildung eines Temperaturprofiles angeordnet sind, dadurch gekennzeichnet, daß die Strukturierungssegmente (11,12) mindestens bereichsweise als Aufrauhungen ausgebildet sind, die unregelmäßige Reflexionsflächen bereitstellen und daß die Strukturierungssegmente durch im wesentlichen glatt ausgebildete Bereiche der Oberfläche (13,14) voneinander getrennt sind.

2. Vorformling nach Anspruch 1, dadurch gekennzeichnet, daß die Strukturierung (8) im Bereich einer Mündung (5) des Vorformlings (1) angeordnet ist.

3. Vorformling nach Anspruch 1 oder 2, dadurch gekennzeichnet, daß die Strukturierung (8) im Bereich der den Vorformling (1) seitlich begrenzenden Wandung (4) angeordnet ist.

4. Vorformling nach einem der Ansprüche 1 bis 3, dadurch gekennzeichnet, daß die Strukturierung (8) im Bereiches eines Halses (6) des Vorformlings (1) angeordnet ist, der zur Ausformung eines Gewindes vorgesehen ist.

5. Vorformling nach einem der Ansprüche 1 bis 4, dadurch gekennzeichnet, daß die Strukturierung (8) im Bereich eines zur Ausformung eines Stützringes (10) vorgesehenen Bereiches des Halses (6) angeordnet ist.

6. Vorformling nach einem der Ansprüche 1 bis 5, dadurch gekennzeichnet, daß die Strukturierung (8) im Bereich eines Halses (6) eines Vorformlings (1) angeordnet ist, der mindestens für eine Gewindeausformung und eine anschließende Thermostabilisierung vorgesehen ist.

7. Vorformling nach einem der Ansprüche 1 bis 6, dadurch gekennzeichnet, daß die Strukturierung (8) im Bereich der einem Innenraum (7) abgewandten äußeren Oberfläche (13) des Vorformlings (1) angeordnet ist.

8. Vorformling nach einem der Ansprüche 1 bis 7, dadurch gekennzeichnet, daß die Strukturierung im Bereich der dem Innenraum (7) zugewandten inneren Oberfläche (14) des Vorformlings (1) angeordnet ist.

9. Vorformling nach einem der Ansprüche 1 bis 8, dadurch gekennzeichnet, daß die Strukturierung (8) in Richtung einer Längsachse (3) mit unterschiedlichen Profilierungstiefen versehen ist.

10. Verfahren zur Herstellung eines thermoplastischen Vorformlings, der im Bereich einer Heizeinrichtung temperierbar ist sowie insbesondere auf eine zur Blasverformung geeignete Temperatur beheizt werden kann und bei dem der Vorformling (1) im Bereich eines Endes mit einer geschlossenen Gestaltung und im Bereich eines anderen Endes mit einer Mündung (5) ausgebildet wird und bei dem der Vorformling (1) mindestens im Bereich eines Teiles seiner Oberfläche (13,14) diese vergrößernd strukturiert wird, sowie bei dem der Vorformling durch einen Formungsvorgang aus einem thermoplastischen Material hergestellt wird, das nach einer Durchführung des Formvorganges abgekühlt wird, dadurch gekennzeichnet, daß der Vorformling (1) nach der Abkühlung mit räumlich voneinander getrennten Strukurierungssegmenten (11,12) versehen wird und daß der Vorformling (1) mittels einer Spritzgußeinrichtung gespritzt und nach Entnahme aus der Spritzgußeinrichtung aufgerauht wird.

11. Verfahren nach Anspruch 10, dadurch gekennzeichnet, daß die Strukturierung (8) mindestens bereichsweise durch eine mechanische Beaufschlagung des Vorformlings (1) erzeugt wird.

12. Verfahren nach einem der Ansprüche 10 oder 11, dadurch gekennzeichnet, daß die Strukturierung (8) mindestens bereichsweise durch eine chemische Beaufschlagung des Vorformlings (1) erzeugt wird.

13. Verfahren nach einem der Ansprüche 10 bis 12, dadurch gekennzeichnet, daß der Vorformling (1) im Bereich seiner Oberfläche mit Strukturierungen (8) unterschiedlicher Profilierungstiefe versehen wird.

14. Verfahren zur Beheizung eines Vorformlings (1) aus einem thermoplastischen Material, insbesondere eines zur Blasverformung geeigneten Vorformlings (1), bei dem der Vorformling (1) von mindestens einer ihn temperierenden Wärmequelle beaufschlagt wird, und bei dem der Vorformling (1) mindestens in einem Bereich seiner Oberfläche (13,14) vor der Durchführung einer Wärmebeaufschlagung mit einer seine Oberfläche (13,14) vergrößernden Strukturierung versehen wird, die relativ zu einer Wanddicke des Vorformlings eine geringe Profilierungstiefe aufweist, dadurch gekennzeichnet, daß eine große Anzahl von unterschiedlichen Oberflächenbereichen mit unterschiedlichen Orientierungen relativ zu einer Hauptrichtung der Oberfläche zur Beeinflussung der Richtung der Wärmestrahlung innerhalb der Vorformlingswandung verwendet werden, die Oberflächenbereiche als Prismen und Spiegel für die Heizstrahlung verwendet werden, die Prismen die Richtung der Heizstrahlung innerhalb des Materials ändern, so daß der wirksame Durchlaufweg zwischen der äußeren Oberfläche und der inneren Oberfläche des Vorformlings verlängert wird und daß durch die Spiegel diejenigen Anteile der Heizstrahlung reflektiert werden, die nicht bereits absorbiert wurden.

15. Verfahren nach Anspruch 14, dadurch gekennzeichnet, daß der Vorformling (1) mindestens während eines Teiles der für seine Beheizung erforderlichen Zeitspanne bezüglich seiner Längsachse (3) mit einer rotatorischen Bewegung beaufschlagt wird.

16. Verfahren nach Anspruch 14 oder 15, dadurch gekennzeichnet, daß der Vorformling (1) während seiner Beheizung an einer Heizeinrichtung (16) vorbeibewegt wird.

17. Verfahren nach einem der Anspruch 14 bis 16, dadurch gekennzeichnet, daß der Vorformling (1) im Bereich der Heizeinrichtung (16) von mindestens zwei in lotrechter Richtung übereinander angeordneten Strahlern (17) beaufschlagt wird.

18. Verfahren nach einem der Ansprüche 14 bis 17, dadurch gekennzeichnet, daß die Strahler (17) zur Unterstützung der Ausbildung eines Temperaturprofils im Bereich des Vorformlings (1) mit unterschiedlichen Ansteuerungen beaufschlagt werden.

19. Verfahren nach einem der Ansprüche 14 bis 18, dadurch gekennzeichnet, daß ein vorgebbares Temperaturprofil im Bereich des Vorformlings (1) durch eine Strukturierung (8) mit an das zu erzeugende Temperaturprofil angepaßten Profilierungstiefen versehen ist.

## Claims

1. Parison of a thermoplastic material, in particular a material which can be orientated during blow moulding, which parison comprises a mouth region (5), a closed bottom (2) and a wall (4) connecting the bottom (2) to the mouth region (5), in which structuring (8) is disposed in the region of at least a part of a surface (13, 14) defining the parison, increases the surface (13, 14) and has a slight profile depth in comparison with a wall thickness of the parison (1), and in which at least two structuring segments (11, 12), which are spatially separated from one another, are disposed in the region of the surface (13, 14) of the parison (1) to assist the formation of a temperature profile, characterised in that the structuring segments (11, 12) are formed at least in regions as roughened areas which provide irregular reflecting faces, and that the structuring segments are separated from one another by essentially smooth regions of the surface (13, 14).

2. Parison according to claim 1, characterised in that the structuring (8) is disposed in the region of a mouth (5) of the parison (1).

3. Parison according to claim 1 or 2, characterised in that the structuring (8) is disposed in the region of the wall (4) which laterally defines the parison (1).

4. Parison according to one of claims 1 to 3, characterised in that the structuring (8) is disposed in the region of a neck (6) of the parison (1) which is provided to form a thread.

5. Parison according to one of claims 1 to 4, characterised in that the structuring (8) is disposed in the region of a region of the neck (6) which is provided to form a support ring (10).

6. Parison according to one of claims 1 to 5, characterised in that the structuring (8) is disposed in the region of a neck (6) of a parison (1) which is provided at least to form a thread and for subsequent thermostabilisation.

7. Parison according to one of claims 1 to 6, characterised in that the structuring (8) is disposed in the region of the outer surface (13) of the parison (1) which is distant from an interior space (7).

8. Parison according to one of claims 1 to 7, characterised in that the structuring is disposed in the region of the inner surface (14) of the parison (1) which faces the interior space (7).

9. Parison according to one of claims 1 to 8, characterised in that the structuring (8) has varying profile depths in the direction of a longitudinal axis (3).

10. Method for producing a thermoplastic parison, which can be tempered in the region of a heating device and in particular heated to a temperature suitable for blow moulding, in which the parison (1) is formed such that it is closed in the region of one end and has a mouth (5) in the region of another end, in which the parison (1) is structured at least in the region of a part of its surface (13, 14) such that this is increased, and in which the parison is produced by a shaping operation from a thermoplastic material which is cooled following the shaping operation, characterised in that the parison (1) is provided with structuring segments (11, 12), which are spatially separated from one another, following cooling, and that the parison (1) is injected by means of an injection moulding device and roughened following removal from the injection moulding device.

11. Method according to claim 10, characterised in that the structuring (8) is produced at least in regions by a mechanical action on the parison (1).

12. Method according to one of claims 10 and 11, characterised in that the structuring (8) is produced at least in regions by a chemical action on the parison (1).

13. Method according to one of claims 10 to 12, characterised in that the parison (1) is provided with structuring (8) of a varying profile depth in the region of its surface.

14. Method for heating a parison (1) of a thermoplastic material, in particular a parison (1) suitable for blow moulding, in which the parison (1) is subjected to the action of at least one heat source which tempers it, and in which the parison (1) is provided at least in one region of its surface (13, 14) with structuring which increases its surface (13, 14) before it is subjected to the action of heat, which structuring has a slight profile depth relative to a wall thickness of the parison, characterised in that a large number of different surface regions with different orientations relative to a main direction of the surface are used to influence the direction of the heat radiation inside the parison wall, the surface regions are used as prisms and reflectors for the heat radiation, the prisms change the direction of the heat radiation inside the material, so that the effective transmission path between the outer surface and the inner surface of the parison is lengthened, and that those portions of the heat radiation which have not already been absorbed are reflected by the reflectors.

15. Method according to claim 14, characterised in that the parison (1) is subjected to a rotational movement with respect to its longitudinal axis (3) at least during a part of the period of time required to heat it.

16. Method according to claim 14 or 15, characterised in that the parison (1) is moved past a heating device (16) while it is being heated.

17. Method according to one of claims 14 to 16, characterised in that the parison (1) is subjected to the action of at least two radiators (17), which are arranged one above the other in the vertical direction, in the region of the heating device (16).

18. Method according to one of claims 14 to 17, characterised in that the radiators (17) are subjected to the action of different controls in order to assist the formation of a temperature profile in the region of the parison (1).

19. Method according to one of claims 14 to 18, characterised in that a predeterminable temperature profile is provided in the region of the parison (1) by means of structuring (8) with profile depths adapted to the temperature profile which is to be produced.

## Revendications

1. Paraison fabriquée en un matériau thermoplastique, en particulier un matériau pouvant être orienté lors d'un façonnage par soufflage, qui présente une zone d'ouverture (5), un fond fermé (2) ainsi qu'une paroi latérale (4) reliant le fond (2) à la zone d'ouverture (6) et dans laquelle une structuration (8) agrandissant la surface (13, 14) est disposée dans la zone d'au moins une partie d'une surface (13, 14) délimitant la paraison, ladite structuration présentant des profondeurs de profilage faibles, par comparaison avec une épaisseur de paroi de la paraison (1), et dans laquelle au moins deux segments de structuration (11, 12) espacés l'un par rapport à l'autre sont disposés dans la zone de la surface (13, 14) de la paraison (1) pour faciliter une réalisation d'un profil des températures,
caractérisée en ce que les segments de structuration (11, 12) sont réalisés au moins par zones sous la forme de rugosités, qui procurent des surfaces de réflexion irrégulières
et en ce que les segments de structuration sont séparés les uns des autres par des zones de la surface (13, 14) réalisées essentiellement plates.

2. Paraison selon la revendication 1, caractérisée en ce que la structuration (8) est placée dans la zone d'une ouverture (5) de la paraison (1).

3. Paraison selon la revendication 1 ou 2, caractérisée en ce que la structuration (8) est placée dans la zone de la paroi (4) limitant latéralement la paraison (1).

4. Paraison selon l'une des revendications 1 à 3, caractérisée en ce que la structuration (8) est placée dans la zone d'un goulot (6) de la paraison (1) prévue pour la réalisation d'un filetage.

5. Paraison selon l'une des revendications 1 à 4, caractérisée en ce que la structuration (8) est placée dans la zone d'une partie du goulot (6) prévue pour la réalisation d'une bague d'appui (10).

6. Paraison selon l'une des revendications 1 à 5, caractérisée en ce que la structuration (8) est disposée dans la zone d'un goulot (6) d'une paraison (1) qui est prévue au moins pour la réalisation d'un filetage et pour une stabilisation thermique consécutive.

7. Paraison selon l'une des revendications 1 à 6, caractérisée en ce que la structuration (8) est placée dans la zone de la surface extérieure (13), orientée à l'opposé de l'espace intérieur (7) de la paraison (1).

8. Paraison selon l'une des revendications 1 à 7, caractérisée en ce que la structuration (8) est placée dans la zone de la surface intérieure (14), orientée vers une surface intérieure (7) de la paraison (1).

9. Paraison selon l'une des revendications 1 à 8, caractérisée en ce que la structuration (8) possède différentes profondeurs de profilage suivant la direction d'un axe longitudinal (3).

10. Procédé de fabrication d'une paraison thermoplastique dont la température peut être égalisée dans la zone d'un appareil de chauffage et qui peut être chauffée en particulier à une température adaptée au façonnage par soufflage,
dans lequel la paraison (1) est réalisée avec une configuration fermée dans la zone d'une extrémité et en comportant une ouverture (5) dans la zone d'une autre extrémité,
dans lequel la paraison (1) est structurée, au moins dans la zone d'une partie de sa surface (13, 14), de manière à ce que celle-ci aille en s'agrandissant,
et dans lequel la paraison est fabriquée par un processus de formage à partir d'un matériau thermoplastique qui est refroidi après exécution du processus de formage,
caractérisé en ce que la paraison (1), après refroidissement, présente des segments de structuration (11, 12) séparés les uns des autres et en ce que la paraison (1) est moulée au moyen d'un dispositif de moulage par injection, et est rendue rugueuse après avoir été retirée du dispositif de moulage par injection.

11. Procédé selon la revendication 10, caractérisé en ce que la structuration (8) est produite au moins localement en soumettant la paraison (1) à un traitement mécanique.

12. Procédé selon l'une des revendications 10 ou 11, caractérisé en ce que la structuration (8) est produite au moins localement en soumettant la paraison (1) à un traitement chimique.

13. Procédé selon l'une des revendications 10 à 12, caractérisé en ce que la paraison (1) reçoit, dans la zone de sa surface, de structurations (8) de différentes profondeurs de profilage.

14. Procédé de chauffage d'une paraison (1) en un matériau thermoplastique, en particulier une paraison (1) adaptée au façonnage par soufflage,
dans lequel la paraison (1) est soumise à l'action d'une source de chaleur égalisant sa température,
et dans lequel la paraison (1) subit, au moins dans la zone de sa surface (13, 14) avant l'exécution d'une action thermique, une structuration agrandissant sa surface (13, 14), cette structuration présentant une profondeur de profil faible par comparaison avec une épaisseur de paroi de la paraison,
caractérisé en ce qu'un grand nombre de zones de surface différentes est utilisé avec différentes orientations par rapport à une direction principale de la surface, pour influencer la direction du rayonnement thermique à l'intérieur de la paroi de la paraison,
ces zones de surface étant utilisées comme prismes et miroirs pour le rayonnement chauffant, les prismes modifiant la direction du rayonnement chauffant à l'intérieur du matériau, de sorte que le trajet efficace de passage entre la surface extérieure et la surface intérieure de la paraison est allongé,
et en ce que les fractions du rayonnement chauffant qui n'ont pas déjà été absorbées sont réfléchies par les miroirs.

15. Procédé selon la revendication 14, caractérisé en ce qu'un mouvement de rotation est imprimé à la paraison (1) par rapport à son axe longitudinal (3), au moins pendant une partie du laps de temps nécessaire à son chauffage.

16. Procédé selon la revendication 14 ou 15, caractérisé en ce que la paraison (1) est déplacée devant un dispositif de chauffage (16) pendant son chauffage.

17. Procédé selon l'une des revendications 14 à 16, caractérisé en ce que la paraison (1) est soumise à l'action d'au moins deux radiateurs (17) disposés l'un au-dessus de l'autre verticalement, dans la zone du dispositif de chauffage (16).

18. Procédé selon l'une des revendications 14 à 17, caractérisé en ce que les radiateurs (17) sont soumis à l'action de différentes commandes pour aider à la réalisation d'un profil des températures dans la zone de la paraison (1).

19. Procédé selon l'une des revendications 14 à 18, caractérisé en ce qu'un profil des températures prédéfinissable est obtenue dans la zone de la paraison (1) grâce à une structuration (8) comportant des profondeurs de profilage adaptées au profil des températures à produire.
